# EUROPÄISCHE PATENTANMELDUNG

(11) **EP 1 235 441 A2**
(43) Veröffentlichungstag der Anmeldung: **28.08.2002**
(21) Anmeldenummer: 02090052.8
(22) Anmeldetag: 12.02.2002
(51) Int. Cl.: H04Q 3/00

(54) **Verfahren zur Realisierung von Anforderungen von Telekommunikationsteilnehmern**

(30) Priorität: 23.02.2001 DE 10109899
(71) Anmelder: SIEMENS AKTIENGESELLSCHAFT, 80333 München (DE)
(72) Erfinder: Gerber, Heiko, 10315 Berlin (DE); Hagen, Robert, 13629 Berlin (DE); Hoerner, Lorene, 13409 Berlin (DE); Krause, Klaus, 14055 Berlin (DE)

(57) **Zusammenfassung**

Die vorliegende Erfindung betrifft ein Verfahren und ein System zur einfachen Realisierung von Anforderungen von Telekommunikationsteilnehmern an von einem Kommunikationsnetz bereitstellbare Dienste. Das Verfahren weist dabei erfindungsgemäß mindestens die folgenden Schritte auf:
a. Abstrahieren und Klassifizieren der Anforderungen in eine entsprechende Anzahl von Klassen (R-Features),
b. Unterteilen der einzelnen Klassen (R-Features) in ein oder mehrere Unterklassen (usages),
c. Eindeutiges Zuordnen einer Unterklasse zu einer oder mehreren entsprechend miteinander zu koppelnden technischen Funktionseinheiten (T-Features).

Das erfindungsgemäße System weist mindestens die folgenden Systemeinheiten auf:
a. einen ersten Katalog von Klassen (R-Features), wobei jede Anforderung genau einer Klasse zuordenbar ist,
b. einen zweiten Katalog von technischen Funktionseinheiten (T-Features), wobei jeder Klasse aus a. jeweils genau ein oder mehrere bestimmte technische Funktionseinheiten zuordenbar sind.

## Beschreibung

Die vorliegende Erfindung betrifft ein Verfahren zur Realisierung von Anforderungen von Telekommunikationsteilnehmern an von einem Kommunikationsnetz bereitstellbare Dienste. Im Dialog mit Telekommunikationsteilnehmern, d.h. mit unmittelbaren Nutzern, beispielsweise den sogenannten Subscribern, mit den Diensteanbietern (Provider) oder mit den Netzwerkoperatoren, kommen immer wieder Änderungswünsche bezüglich der vom Kommunikationsnetz bereitstellbaren Dienste auf. Bei letzteren handelt es sich dabei vorrangig um sogenannte IN-Dienste, d.h. um Dienste, die über den reinen Übermittlungsdienst und dessen ergänzende Dienstmerkmale hinausgehen. Im Allgemeinen werden diese durch das Intelligente Netz (IN) bereitstellbaren Dienste durch das Zusammenwirken mehrerer technisch in sich abgeschlossenen Funktionseinheiten realisiert. Diese technischen Funktionseinheiten, auch T-Features genannt, werden dabei entsprechend in das Intelligente Netz integriert.

Bei jedem neu aufkommenden Änderungswunsch seitens der Telekommunikationsteilnehmer bzw. -kunden war es bislang nötig, diesen im Einzelnen zu analysieren, um ihn dann individuell durch eine oder mehrere entsprechend miteinander zu koppelnde technische Funktionseinheiten (T-Features) zu realisieren. Diese Vorgehensweise erfordert einen hohen Zeitaufwand, da für jeden Änderungswunsch bzw. für jede neue Anforderung an einen vom Kommunikationsnetz bereitstellbaren Dienst aus einer Reihe von technischen Funktionseinheiten immer wieder neu diejenigen Funktionseinheiten (T-Features) herausgesucht werden müssen, die zur Realisierung in Frage kommen, und diese T-Features dann wiederum entsprechend miteinander gekoppelt werden müssen.

Aufgrund des generell schnelllebigen Telekommunikationsmarktes und der immer größer werdenden Anzahl von Änderungswünschen bezüglich der verschiedensten vom Kommunikationsnetz bereitstellbaren IN-Dienste, ist es wichtig, diesen Wünschen aufgrund der gleichzeitig immer größer werdenden Konkurrenz auf dem Telekommunikationsmarkt, schnellst möglich gerecht zu werden.

Eine Aufgabe der vorliegenden Erfindung war es demnach, ein einfaches und schnelles Verfahren zur Realisierung bzw. Umsetzung von Anforderungen von Telekommunikationsteilnehmern an von einem Kommunikationsnetz bereitstellbare Dienste bereitzustellen.

Gelöst wird diese Aufgabe durch ein Verfahren gemäß Anspruch 1 und mittels der Nutzung eines Systems gemäß Anspruch 4. Vorteilhafte Ausführungsformen sind in den entsprechenden Unteransprüchen angeführt.

Gemäß Anspruch 1 wird erfindungsgemäß ein Verfahren zur einfachen Realisierung von Anforderungen von Telekommunikationsteilnehmern an von einem Kommunikationsnetz bereitstellbare Dienste bereitgestellt, wobei das Verfahren mindestens die folgenden Schritte aufweist:
a. Abstrahieren und Klassifizieren der Anforderungen in eine entsprechende Anzahl von Klassen (R-Features),
b. Unterteilen der einzelnen Klassen (R-Features) in ein oder mehrere Unterklassen (usages),
c. Eindeutiges Zuordnen einer Unterklasse zu einer oder mehreren entsprechend miteinander zu koppelnden technischen Funktionseinheiten (T-Features).

Während man bislang immer wieder von Neuem mit einem speziellen Änderungswunsch bzw. einer speziellen Anforderung seitens der Telekommunikationsteilnehmer, d.h. der Subscriber, der Provider oder der Netzwerkoperatoren konfrontiert war und diese Anforderung (Requirement) dann individuell hinsichtlich seiner möglichen technischen Realisierbarkeit analysieren musste, ist es nun möglich jede spezielle Anforderung in einer Klasse, bzw. einem R-Feature (Requirement-Feature) wiederzufinden. Erfindungsgemäß werden alle bisher aufgetretenen Änderungswünsche zunächst abstrahiert, d.h. losgelöst von einem bestimmten Dienst gesehen. Sodann lassen sie sich dienstunabhängig klassifizieren bzw. katagolisieren. Es ergeben sich dabei erfindungsgemäß eine bestimmte, abzählbare Anzahl von Klassen, sogenannte R-Features (Requirements-Features). Diese R-Features bilden dabei oft eine Art "Oberbegriff" und lassen sich meist wiederum etwas differenzieren bzw. spezifizieren, wobei sich jeweils eine bestimmte Anzahl von Unterklassen, sogenannte Usages, herauskristallisieren. Man erhält so einen Katalog von Anforderungen (R-Features), ähnlich einem Baukasten, bestehend aus verschiedenen Legosteinen, mit dessen Hilfe man im wesentlichen alle neu aufkommenden Änderungswünsche seitens der Telekommunikationsteilnehmer aus R-Features "zusammenbauen" bzw. zusammensetzen kann. Ein eventuell verbleibender kleiner, nicht durch R-Features abdeckbarer Teil der Änderungswünsche muss individuell realisiert werden. Je nach Bedeutung dieses eventuell verbleibenden Teils ist abzuwägen, ob es sinnvoll erscheint, diesen als neues R-Feature in die erfindungsgemäße Klassifizierung mit aufzunehmen.

Die R-Features bzw. die entsprechenden Unterklassen bzw. Usages lassen sich durch ein oder mehrere miteinander gekoppelte, bekannte technische Funktionseinheiten bzw. T-Features realisieren. Erfindungsgemäß wird jede Unterklasse zu ihrer Realisierung ein oder mehreren entsprechend miteinander gekoppelten T-Features zugeordnet. Es bleibt dann Aufgabe der Entwickler, diese genau bestimmten T-Features gegebenenfalls miteinander zu koppeln und an der gewünschten Wirkstelle innerhalb des Intelligenten Netzes zu integrieren bzw. zu lokalisieren. Dadurch ist es leicht möglich, sehr schnell und einfach bestimmte Anforderungen seitens der Telekommunikationsteilnehmer nach Abstraktion und Einordnung derselben in den Katalog an R-Features durch Ablesen der entsprechend zugeordneten T-Features zu realisieren.

Bei dem Entwicklungsprozess und der Realisierung der Dienste geht man vorzugsweise nach einer Art Phasenmodell (Service Life Cycle) vor. Generell lässt sich der Entwicklungsprozess in die folgenden 7 Phasen unterteilen:
- Phase 1:: Spezifizierung der vom Telekommunikationsteilnehmer gestellten Anforderung
- Phase 2:: Gültigkeitsprüfung der Anforderung (Requirement Validation)
- Phase 3: Spezifizierung des funktionellen Dienstes, d.h. "welche Funktion muss erbracht werden, um der gestellten Anforderung gerecht zu werden?"
- Phase 4: Verifikation der Spezifizierung
- Phase 5: Diensteentwicklung
- Phase 6: Diensteakzeptanz bzw -abnahme (Service Acceptance)
- Phase 7: Diensteinstandhaltung (Service Maintenance).

In Phase 1 werden zunächst die Anforderungen (Requirements) der Subscriber, der Provider und der Netzwerkoperatoren an verschiedene Dienste und deren Verwaltung (management) gesammelt. Im Anschluss daran sichtet man den Bestand an definierten R-Features aus der erfindungsgemäß vorgenommenen Klassifizierung nach Schritt a. des erfindungsgemäßen Verfahrens und ordnet die gestellten Anforderungen entsprechend ein. Man erhält so eine einfache Zuordnung der gestellten Anforderungen zu bestimmten realisierbaren, vorzugsweise diensteunabhängigen R-Features. Der Vorteil bei dieser Vorgehensweise liegt darin, dass man es nach Phase 1 nicht mehr mit einzelnen individuellen Anforderungen zu tun hat, sondern mit für mehrere Dienste vereinheitlichbaren Anforderungen. Dadurch wird auch die Realisierung der entsprechenden Anforderungen im Großen und Ganzen diensteunabhängig und universeller einsetzbar.

In Phase 2 werden die Anforderungen bezüglich ihrer "Sinnhaftigkeit" geprüft, d.h. es werden die technischen bzw. durchführbaren, die ökonomischen (Kosten, Performance) und die funktionalen Aspekte beleuchtet. Zur Durchführung dieser Phase kommen Marktsimulationen und Kunden-Workshops in Frage. Es wird die Wirkung auf sich gegenseitig beeinflussende Systeme und Organisationen analysiert. Man erhält so letztlich eine genaue Vorstellung von der wirklich gewünschten und zu realisierenden bzw. umzusetzenden Anforderung. Gleichzeitig ergibt sich in einem sehr frühen Entwicklungsstadium eine Vorabeinschätzung der entstehenden Entwicklungskosten sowie der Einführungs- und dann sich ergebenden laufenden Kosten bei Realisierung bzw. Umsetzung der Anforderung in entsprechenden IN-Diensten des Intelligenten Netzes. Vorzugsweise soll in dieser Phase die Anforderung bzw. die Dienstidee zusammen mit dem jeweiligen Telekommunikationsteilnehmer unmittelbar vor Ort besprochen, spezifiziert und verifiziert werden. Jeder Unterklasse bzw. jedem usage ist erfindungsgemäß ein wohl definiertes, bereits getestetes und realisiertes Modell zuordenbar. Zur Simulation eines Dienstes, der sich nach vorgenommener Analyse aus einer bestimmten Anzahl von usages zusammensetzen lässt, fügt man nun die entsprechenden, den einzelnen usages zuordenbaren Modelle in einem Simulationstool zu einem Gesamtmodell zusammen und kann damit überprüfen, ob die Anforderung bzw. die Dienstidee erfasst wurde. Dadurch kommt es sehr früh, d.h. noch vor der eigentlichen Umsetzung der Anforderung durch technische Funktionseinheiten, zur Aufklärung von eventuellen Missverständnissen. Gleichzeitig lassen sich durch solche Simulationen eventuell noch andere Vorzüge bezüglich eines Dienstes mit einbauen.

In Phase 3 erfolgt der eigentliche Übergang von den R-Features zu den T-Features. Dabei wird genau analysiert, was eigentlich durch die gestellte Anforderung letztlich funktional umgesetzt werden muss. Es wird ein direkter Zusammenhang hergestellt zwischen Anforderung (R-Feature) und funktionaler Umsetzung (T-Feature). Das oder die miteinander zu koppelnden T-Features müssen dabei in ihrer Funktion der gestellten Anforderung genüge tun. Gleichzeitig ergibt sich durch diese Zuordnung eine genauere Spezifizierung hinsichtlich der Verwaltung eines der gestellten Anforderung gerecht werdenden Dienstes. Das Zusammenwirken mit externen Systemen lässt sich analysieren und beurteilen.
Erfindungsgemäß ergibt sich durch die Klassifizierung der R-Features eine klare, exakte und unzweideutige Abbildungsvorschrift von der Seite der R-Features auf die Seite der T-Features. Diese Abbildungsvorschrift erleichtert und beschleunigt den gesamten Entwicklungsprozess.

In Phase 4 wird die richtige Zuordnung durch Tests anhand von Modellen verifiziert, d.h. es wird geprüft, ob die funktionelle Spezifizierung nach Phase 3 auch wirklich die gestellten Anforderungen an den oder die entsprechenden Dienste erfüllt. Bei der Verifikation kann gleichzeitig eine Abschätzung bezüglich der Leistungsfähigkeit bzw. der Performance der funktionellen Realisierung getroffen werden. Eine derartige Verifikation findet vorzugsweise mittels Simulationen statt. Erfindungsgemäß gibt es zu jedem T-Feature ein realisiertes, wohl definiertes Modell. Ähnlich wie bei der Simulation auf Ebene der R-Features, wie dies unter Phase 2 erläutert ist, werden auch hier zur Verifikation der Funktionalität der entsprechend gekoppelten T-Features, die einzelnen Modelle der in Frage kommenden T-Features entsprechend miteinander zu einem Gesamtmodell gekoppelt, um so den gewünschten Dienst auf Ebene der T-Features simulieren und somit überprüfen zu können.

Die Phasen 5, 6 und 7 beinhalten letztlich die eigentliche tatsächliche Realisierung der entsprechenden R-Features. In Phase 6 werden Testläufe, vorzugsweise in der entsprechenden Netzwerkumgebung durchgeführt. Sowohl Dienste- wie auch Verwaltungsanwendungen werden kontrolliert. Festgestellte Fehler oder Mängel werden korrigiert. Phase 7 umfasst sowohl die Dienste- wie auch die Verwaltungsinstandhaltung.

## Patentansprüche

1. Verfahren zur einfachen Realisierung von Anforderungen von Telekommunikationsteilnehmern an von einem Kommunikationsnetz bereitstellbare Dienste, wobei das Verfahren mindestens die folgenden Schritte aufweist:
a) Abstrahieren und Klassifizieren der Anforderungen in eine entsprechende Anzahl von Klassen (R-Features),
b) Unterteilen der einzelnen Klassen (R-Features) in ein oder mehrere Unterklassen (usages),
c) Eindeutiges Zuordnen einer Unterklasse zu einer oder mehreren entsprechend miteinander zu koppelnden technischen Funktionseinheiten (T-Features).

2. Verfahren nach Anspruch 1,
**dadurch gekennzeichnet,**
**dass** das Verfahren mindestens noch den folgenden weiteren Schritt aufweist:
d) Durchführen mindestens eines Testlaufes der entsprechend nach c. zugeordneten technischen Funktionseinheiten.

3. Verfahren nach Anspruch 1 oder 2,
**dadurch gekennzeichnet,**
**dass** die Schritte a. bis c. jeweils durch ein oder mehrere Simulationsläufe verifiziert werden können.

4. System zur einfachen Realisierung von Anforderungen von Telekommunikationsteilnehmern an von einem Kommunikationsnetz bereitstellbare Dienste, wobei das System mindestens die folgenden Systemeinheiten aufweist:
a) einen ersten Katalog von Klassen (R-Features), wobei jede Anforderung genau einer Klasse zuordenbar ist,
b) einen zweiten Katalog von technischen Funktionseinheiten (T-Features), wobei jeder Klasse aus a. jeweils genau ein oder mehrere bestimmte technische Funktionseinheiten zuordenbar sind.

5. System nach Anspruch 4,
**dadurch gekennzeichnet,**
**dass** die Klassen aus a. jeweils in ein oder mehrere Unterklassen (Usages) unterteilt sind und jeder dieser Unterklassen jeweils genau ein oder mehrere bestimmte technische Funktionseinheiten (T-Features) zuordenbar sind.

6. System nach Anspruch 4 oder 5,
**dadurch gekennzeichnet,**
**dass** jeder Klasse (R-Feature) mindestens ein realisiertes, definiertes Modell zugeordnet ist.

7. System nach einem der Ansprüche 4 bis 6,
**dadurch gekennzeichnet,**
**dass** jeder technischen Funktionseinheit (T-Feature) ein realisiertes, definiertes Modell zugeordnet ist.
